# EUROPEAN PATENT APPLICATION

(11) **EP 2 120 162 A1**
(43) Date of publication of application: **18.11.2009**
(21) Application number: 09159135.4
(22) Date of filing: 30.04.2009
(51) Int. Cl.: G06F 17/30

(54) **Image retrieval apparatus, image retrieval method, data processing program, and recording medium**

(30) Priority: 16.05.2008 JP 2008130067
(71) Applicant: Ricoh Company, Ltd., Tokyo 143-8555 (JP)
(72) Inventor: Itoh, Hideo, Machida-shi Tokyo (JP)
(74) Representative: Schwabe - Sandmair - Marx

(57) **Abstract**

An disclosed image retrieval apparatus is capable of extracting a similar image similar to an input image and includes a unit to acquire input image data, a unit to generate a plurality of processed image data, a unit to generate a plurality of extraction condition data that become conditions for extracting the similar image from the retrieval target image data, a unit to extract the similar image based on each of the generated plurality of extraction condition data, and a unit to generate extraction result display data to display the extracted similar image.

## Description

### BACKGROUND OF THE INVENTION

### 1. Field of the Invention

The present invention generally relates to an image retrieval apparatus, an image retrieval method, a data processing program, and a recording medium, and more particularly to those capable of improving the retrieval accuracy in image retrieval.

### 2. Description of the Related Art

Techniques of retrieving electronic data and techniques of displaying the retrieved electronic data have been becoming more and more important as an amount of data to be retrieved and the number of retrieved results have been increasing. This is because a large amount of retrieval results may hide target data and it makes it difficult to retrieve the correct data. As a known retrieval technique that has been proposed, there is an image retrieval method (see, for example, Patent Document 1) in which an image is input as image data for retrieval and, from among target images stored in advance, the image data similar to the input image are extracted.

Such an image retrieval technique as described in Patent Document 1 may be used in, for example, retrieval of Patent Application Documents. When, for example, a drawing included in a document such as patent document is retrieved, an input drawing is used as a retrieval key so that a document having a drawing similar to the input drawing is extracted. Such technique may also be used when image data are retrieved by using input image data as a retrieval key from a database storing a plurality of image data.

Generally in such image retrieval techniques, so-called feature values of input image data are extracted, and the extracted feature values are used as condition data to be compared with those of image data stored in advance, so that a degree of conformity between the feature values is calculated to extract the similar image based on the calculated degree of conformity. In conventional image retrieval techniques, however, the feature values to be used to retrieve image data are limited to the feature values that are unlikely to be affected even when the image data are rotated or inverted.

Patent Document 1: Japanese Patent Application Publication No.: 2002-245087

However, when it is assumed that only the feature values are used that are not affected by, for example, rotation or reverse of image data, the shape of goods or figures may not be used as the feature values. Due to such limitation, unfortunately, the improvement of accuracy of image retrieval is limited.

To resolve the limitation of the feature values that can be used for the retrieval, there has been a proposed technique in which, in addition to the extraction of an image similar to an image input for retrieval (hereinafter referred to as "input image") is performed, an image data similar to a predetermined image-processed image(hereinafter referred to as "processed image") are also extracted. By additionally doing in this way, it may become possible to extract an image from a larger amount of image data that seem to be related to the input image. However, when such a technique is being used, it may become difficult to recognize whether each of the extracted image data is extracted based on the input image or the image-processed image, which may make it difficult for a user to fully understand the retrieval result.

### SUMMARY OF THE INVENTION

The present invention is made in light of the above circumstances and may provide an image retrieval apparatus and an image retrieval method capable of reducing the limitations of feature values that can be used for determining similar images, improving the accuracy of the image retrieval, and allowing a user to understand a result of the image retrieval.

According to an aspect of the present invention, there is provided an image retrieval apparatus capable of extracting a similar image from a plurality of retrieval target image data stored in advance, the similar image being similar to an input image. The image retrieval apparatus includes an input image data acquisition unit acquiring data of the input image as input image data, an image processing unit generating a plurality of processed image data by performing a process on the acquired input image data, an extraction condition data generation unit which, based on the generated plurality of processed image data, generates a plurality of extraction condition data that become conditions for extracting the similar image from the retrieval target image data, an image data extraction unit extracting the similar image from the retrieval target image data based on each of the generated plurality of extraction condition data, and an extraction result display data generation unit configured to generate extraction result display data to display the extracted similar image. In the image retrieval apparatus, the extraction result display data generation unit generates the extraction result display data so that the extracted similar image is associated and displayed with the extraction condition data used as the conditions to extract the similar image.

### BRIEF DESCRIPTION OF THE DRAWINGS

Other objects, features, and advantages of the present invention will become more apparent from the following description when read in conjunction with the accompanying drawings, in which:
FIG. 1 is a drawing showing an exemplary operational configuration of an image retrieval system according to an embodiment of the present invention;
FIG. 2 is a drawing showing an exemplary hardware configuration of an image retrieval apparatus according to an embodiment of the present invention;
FIG. 3 is a block diagram showing an exemplary functional configuration of the image retrieval apparatus according to an embodiment of the present invention;
FIG. 4 is a sequence diagram showing an operation of the image retrieval apparatus according to an embodiment of the present invention;
FIGS. 5A and 5B are drawings showing examples of input image data and processed image data, respectively, according to an embodiment of the present invention;
FIG. 6 is a drawing showing an example of data generated in an image retrieval processing step according to an embodiment of the present invention;
FIG. 7 is a drawing showing an example of data stored in an image data DB according to an embodiment of the present invention;
FIG. 8 is a drawing showing an example of data generated in an image retrieval processing step according to an embodiment of the present invention;
FIG. 9 is a drawing showing another example of data generated in an image retrieval processing step according to an embodiment of the present invention;
FIG. 10 is a drawing showing still another example of data generated in an image retrieval processing step according to an embodiment of the present invention;
FIG. 11 is a drawing showing an display sample of an extraction result display menu according to an embodiment of the present invention; and
FIG. 12 is a drawing showing examples of image processing that can be performed by an image processing section according to an embodiment of the present invention.

### DETAILED DESCRIPTION OF THE PREFERRED EMBODIMENTS

In the following, an embodiment of the present invention is described with reference to the accompanying drawings.

As an example of an image retrieval apparatus according to the embodiment of the present invention, based on input image data, an apparatus capable of retrieving retrieval target image data stored in advance and extracting image data similar to input image data is described.

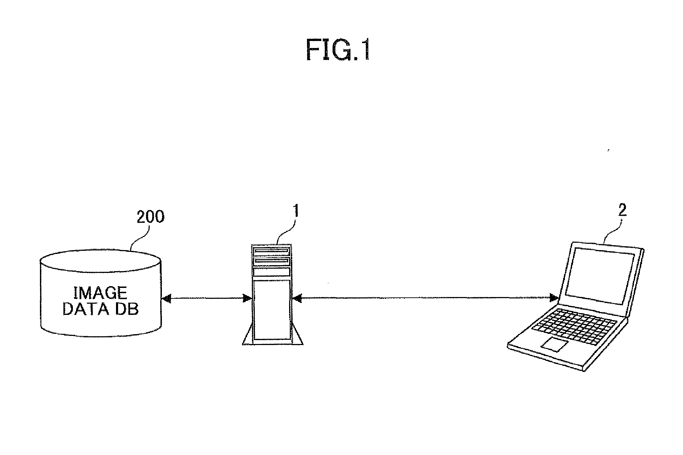

FIG. 1 shows an exemplary operating configuration of an image retrieval system according to the embodiment of the present invention. As shown in FIG. 1, the image retrieval system according to the embodiment of the present invention includes an image retrieval apparatus 1, a client apparatus 2, and an image data DB (database) 200. The client apparatus 2 may be constituted by a general data processing apparatus such as a PC (Personal Computer). The image retrieval apparatus 1 is connected to the client apparatus 2 via a network and retrieves image data stored in the image data DB 200 upon receiving a retrieval request from the client apparatus 2.

The image data DB 200 stores a plurality of image data as retrieval target image data. As shown in FIG. 1, in this embodiment, a case is described where the image data DB 200 is separately provided from the image retrieval apparatus 1. However, the image data DB 200 may be integrated in the image retrieval apparatus 1. The image data DB 200 is constituted by a non volatile recording medium such as an HDD (Hard Disk Drive). Further, those image data DB 200, the image retrieval apparatus 1, and the client apparatus 2 may be integrally provided as a single apparatus.

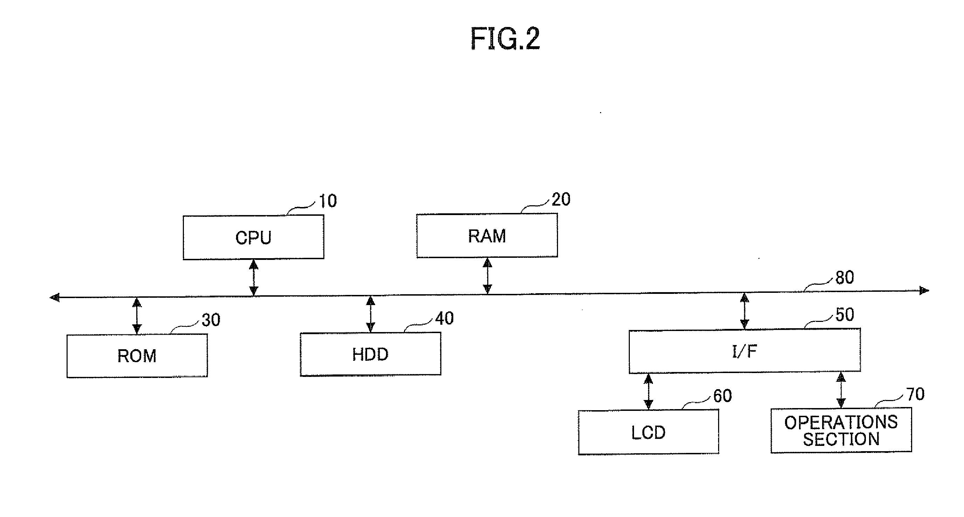

Next, an exemplary hardware configuration of the image retrieval apparatus 1 according to the embodiment of the present invention is described. FIG. 2 is a block diagram showing a hardware configuration of the image retrieval apparatus 1 according to the embodiment of the present invention. As shown in FIG. 2, the image retrieval apparatus 1 has a configuration similar to that of a data processing terminal such as a general server or PC (Personal Computer).

Namely, the image retrieval apparatus 1 according to the embodiment of the present invention includes a CPU (Central Processing Unit) 10, a RAM (Random Access Memory ) 20, a ROM (Read Only Memory) 30, an HDD (Hard Disk Drive) 40, and an I/F (Interface) 50. Those elements are connected to each other through a bus 80 in the image retrieval apparatus 1. Further, each of an LCD (Liquid Crystal Display) 60 and an operations section 70 is connected to the I/F 50.

The CPU 10 is a computing means for controlling the entire operations of the image retrieval apparatus 1. The RAM 20 is a volatile recording medium capable of reading and writing data and serves as a working area upon the CPU 10 processing data. The ROM 30 is a non-volatile recording medium dedicated to read data only and stores programs including firmware. The HDD 40 is a non-volatile recording medium capable of reading and writing data and stores an OS (Operating System), various control programs, application programs and the like.

The I/F 50 serves to connect between the bus 80 and various hardware and between the bus 80 and a network and the like. The LCD 60 serves as a visual user interface notifying a user of a status of the image retrieval apparatus 1. The operations section 70 is a user interface such as a keyboard and a mouse allowing a user to input data to the image retrieval apparatus 1.

As described above with reference to FIG. 1, the image retrieval apparatus 1 according to the embodiment of the present invention may be operated as a server. In such a case, a user interface such as the LCD and the operations section 70 may be eliminated. Further, the image retrieval apparatus 1 may be any kind of apparatus as long as being a data terminal having data processing capability such as a general PC or MFP (MultiFunction Peripheral).

In such a hardware configuration, a software control section is constituted by loading a program stored in a recording medium such as the ROM 30, the HDD 40, and an optical disk (not shown) to the RAM 20 and being operated under the control of the CPU 10. By having a combination of the constituted software control section and the hardware described above, a functional block necessary to provide the functions of the image retrieval apparatus 1 according to the embodiment of the present invention is constituted.

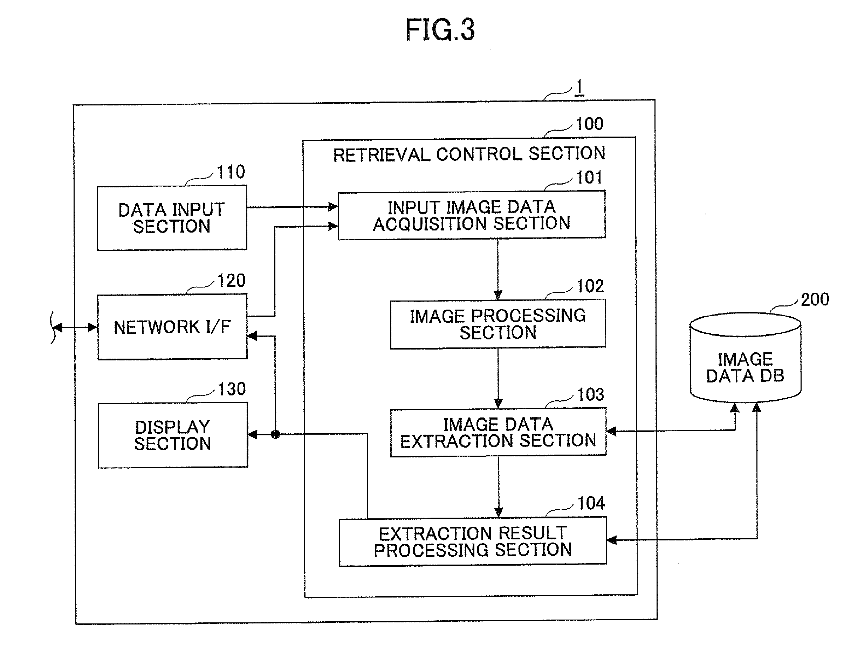

Next, the functional block of the image retrieval apparatus 1 according to the embodiment of the present invention is described with reference to FIG. 3. FIG. 3 is a block diagram showing the function block of the image retrieval apparatus 1 according to the embodiment of the present invention along with the image data DB 200 storing target image data retrieved by the image retrieval apparatus 1. As shown in FIG. 3, the image retrieval apparatus 1 according to the embodiment of the present invention includes a retrieval control section 100, a data input section 110, a network I/F 120, and a display section 130.

The data input section 110 is provided so that a user can operate the image retrieval apparatus 1 to input data to the retrieval control section 100 and constituted by the I/F 50 and the operations section 70 shown in FIG. 2. The network I/F 120 is provided so that the image retrieval apparatus 1 can receive and transmit data via a network and constituted by the I/F 50 shown in FIG. 2, more specifically by an interface for Ethernet (registered trademark) connection, an interface for USB (Universal Serial Bus) connection, and the like.

The display section 130 displays an operating status of the image retrieval apparatus 1, retrieval results and the like and is constituted by the I/F 50 and the LCD 60 shown in FIG. 2. The retrieval control section 100 performs a retrieval function of the image retrieval apparatus 1 according to the embodiment of the present invention and includes an input image data acquisition section 101, an image processing section 102, an image data extraction section 103, and an extraction result processing section 104.

The input image data acquisition section 101 acquires image data as input image data, i.e., image data for retrieval used as a retrieval key, the image data being input by a user through the data input section 110 or being input through a network and the network I/F 120. The input image data acquisition section 101 is constituted by operating a program under the control of the CPU 10, the program having been loaded to the RAM 20 shown in FIG. 2.

The image processing section 102 generates image-processed image data (hereinafter referred to as "processed image data") by performing a predetermined image processing on the input image data acquired by the input image data acquisition section 101. Namely, the image processing section 102 serves as image processing means. Further, the image processing section 102 calculates feature values of the image data, so that the calculated feature values can be used as the retrieval key for retrieving similar image data from the image data DB 200 in accordance with the processed image data generated as described above and the input image data.

The image processing section 102 transmits the calculated feature values of the image data to the image data extraction section 103 as the data indicating the conditions which are used for extracting similar image data from the image data DB 200 (hereinafter may be referred to as "extraction condition data"). In that sense, the image processing section 102 serves as an extraction condition data generation section. The extraction condition data generation section is constituted by operating a program under the control of the CPU 10, the program having been loaded to the RAM 20 shown in FIG. 2. The process performed by the image processing section 102 is described below.

The image data extraction section 103 extracts the image data stored in the image data DB 200 based on the extraction condition data generated by the image processing section 102. Namely, the image data extraction section 103 serves as an image data extraction section configured to extract the image data adapted to the conditions defined by the extraction condition data. The image data extraction section is constituted by operating a program under the control of the CPU 10, the program having been loaded to the RAM 20 shown in FIG. 2. Further, the image data extraction section 103 generates a list of image data extracted from the image data DB 200 (hereinafter referred to as "image list data").

The extraction result processing section 104 displays the image list data generated by the image data extraction section 103 on the display section 130 or generates and outputs display data to be displayed on a display section of the client apparatus 2. Namely, the extraction result processing section 104 serves as an extraction result display data generation section configured to generate display data to be used to display the data extracted as similar image data. The extraction result display data generation section is constituted by operating a program under the control of the CPU 10, the program having been loaded to the RAM 20 shown in FIG. 2. Further, when the display section 130 is used, the display data are used as the data to display the image data extracted as the similar image data.

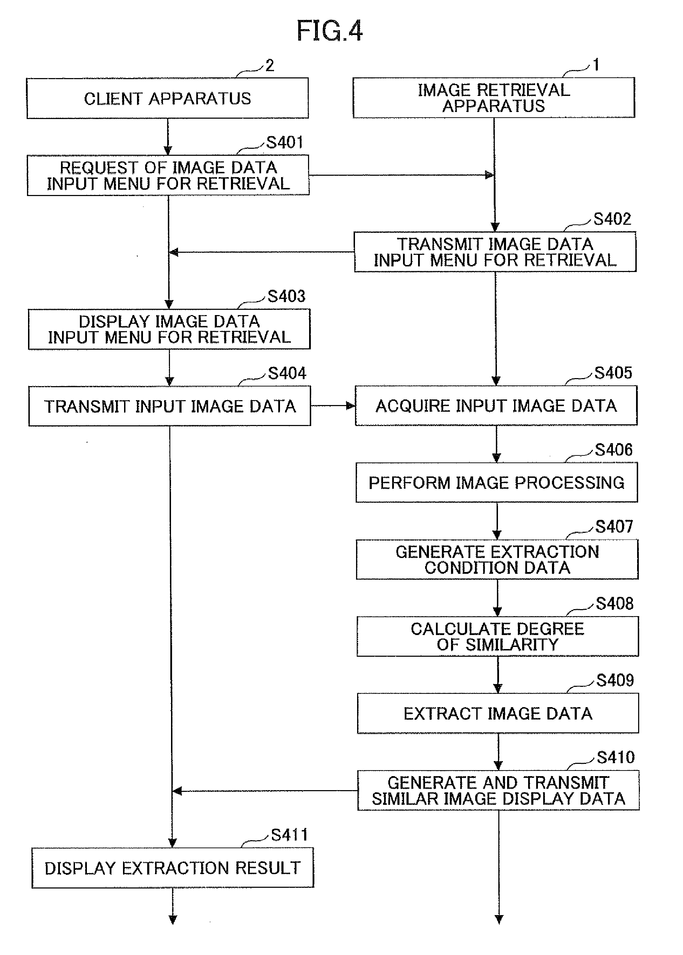

According to an image retrieval apparatus 1 according to the embodiment of the present invention, there are some features in the generation of the extraction condition data performed by the image processing section 102, the generation of the display data and the display mode of the generated display data performed by the extraction result processing section 104. In the following, operations of the image retrieval apparatus 1 according to the embodiment of the present invention are described with reference to FIG. 4. FIG. 4 is a sequence diagram showing retrieval operations performed in an image retrieval system according to the embodiment of the present invention.

As shown in FIG. 4, when the image data registered in the image data DB 200 are to be retrieved, first, a user operates the client apparatus 2 to send a request to the image retrieval apparatus 1 to transmit data to the client apparatus 2 so that the client apparatus 2 can display an image data input menu for retrieval (in step S401). In response to the request from the client apparatus 2, the image retrieval apparatus 1 transmits the requested data (in step S402).

Upon receiving the data to display the image data input menu for retrieval, the client apparatus 2 displays the image data input menu for retrieval (in step S403). Herein, the image data input menu for retrieval refers to a menu through which the image data can be input. In the following description of the embodiment of the present invention, a case is described as an example where a user operates the client apparatus 2 so as to use the functions of the image retrieval apparatus 1.

In response to the user's operations, the client apparatus 2 transmits the image data input through the image data input menu for retrieval (hereinafter referred to as "input image data") to the image retrieval apparatus 1 (in step S404). The input image data transmitted to the image retrieval apparatus 1 is input in the image retrieval apparatus 1 via the network I/F 120, so that the input image data acquisition section 101 of the retrieval control section 100 acquires the input image data (in step S405). Upon receiving the input image data from the input image data acquisition section 101, the image processing section 102 performs a predetermined image processing on the received input image data (in step S406).

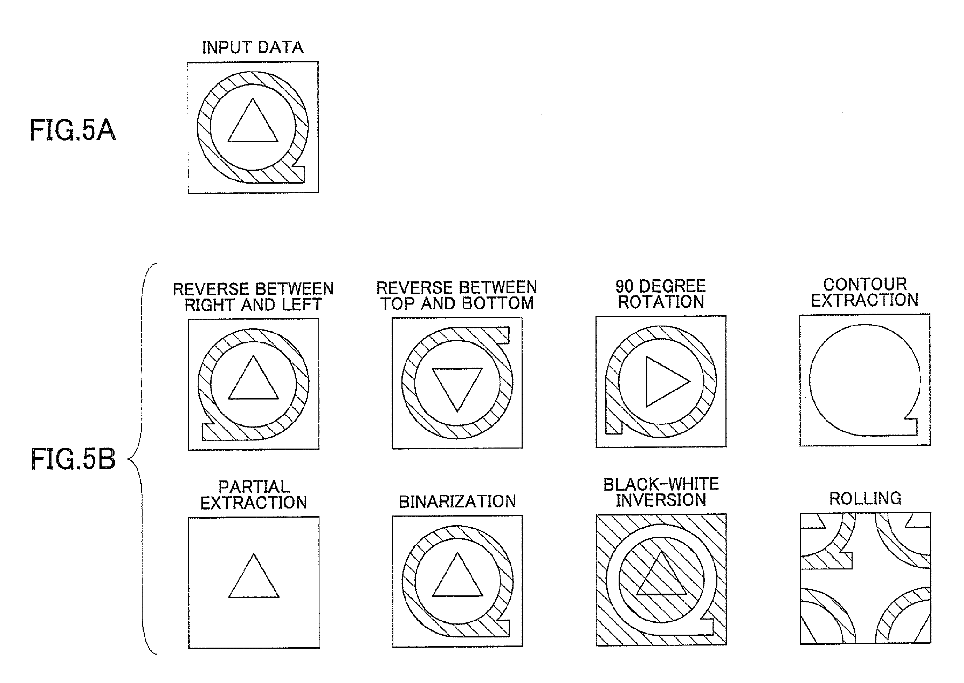

The image processing performed in step S406 is described with reference to FIGS. 5A and 5B. FIG. 5A shows an example of the input image data according to the embodiment of the present invention. As shown in FIG. 5A, in the description of this embodiment of the present invention, as the example of the input image data, the image data having an equilateral triangle formed inside a partially deformed circular shape are provided. FIG. 5B shows a plurality of examples of the processed image data generated by performing various image processing in step S406.

As shown in FIG. 5B, according to the embodiment of the present invention, the image processing section 102 performs various image processing such as "reverse between right and left", "reverse between top and bottom", "90 degree rotation", "contour extraction", "partial extraction", "binarization", "black-white inversion", and "rolling" on the input image data. When any process such as the "reverse between right and left", "reverse between top and bottom", and "rotation" is performed, the image processing section 102 serves as a rotation image data generation section. The rotation image data generation section is constituted by operating a program under the control of the CPU 10, the program having been loaded to the RAM 20 shown in FIG. 2.

When such processed image data as shown in FIG. 5B are generated, the image processing section 102 generates the extraction condition data based on the input image data and the processed image data (in step S407). In the process of step S407, the image processing section 102 calculates feature values of the input image data and the processed image data (hereinafter collectively referred to as condition image data") to generate the extraction condition data.

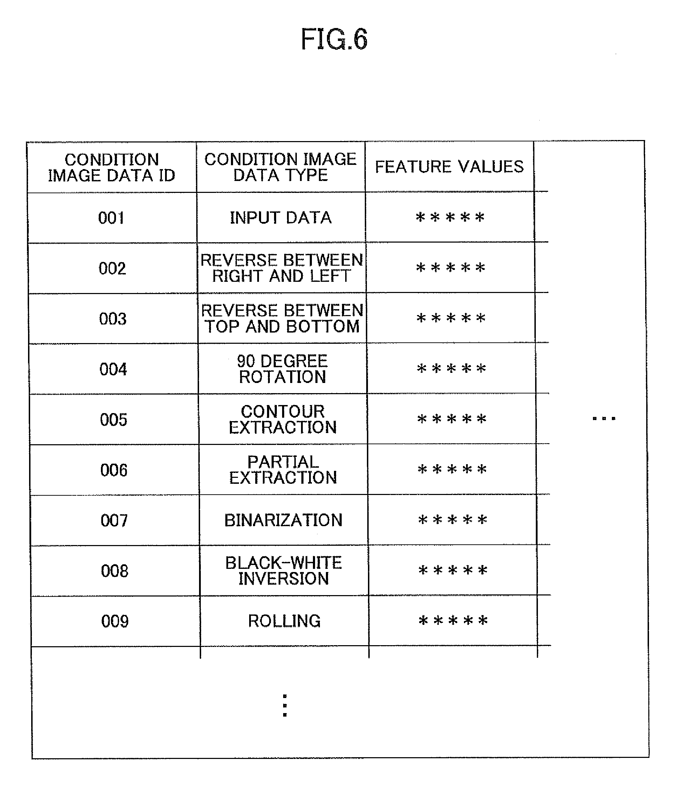

The feature values of image data described above refer to the data calculated based on shapes of figures included in the image, vectors of lines constituting the figures, colors of the figures, or text data included in the image data and can be obtained by a known method. However, there is one feature according to the embodiment of the present invention that there is no limitation of feature values that can be used in step S407. The effect of the feature is described below. FIG. 6 shows exemplary data generated as the result of step S407.

As shown in FIG. 6, in the process of step S407, the image processing section 102 assigns each ID (hereinafter referred to as "condition image data ID") to the corresponding condition image data shown in FIGS. 5A and 5B for the identification purposes. Further, the image processing section 102 calculates the feature values described above and generates the extraction condition data by associating the condition image data ID with the corresponding condition image data type. Herein, the condition image data type refers to the data indicating the input image data or the type of image processing performed on the input image data to generate the processed image data. Upon generating the extraction condition data, the image processing section 102 transmits the generated extraction condition data to the image data extraction section 103.

Upon receiving the extraction condition data from the image processing section 102, the image data extraction section 103 calculates the degree of similarity with respect to the image data included in the documents stored in the image data DB 200 based on the extraction condition data (in step S408). This degree of similarity calculated in step S408 refers to the degree of similarity with respect to the feature values of the condition image data used as the extraction condition information. Namely, in step S408, the image data extraction section 103 compares the feature values calculated in step S407 with the feature values of the image data stored in the image data DB 200 to calculate the degree of the similarity between those feature values. As the method of calculating the degree of similarity, a calculation method used in a known image retrieval technique may be used.

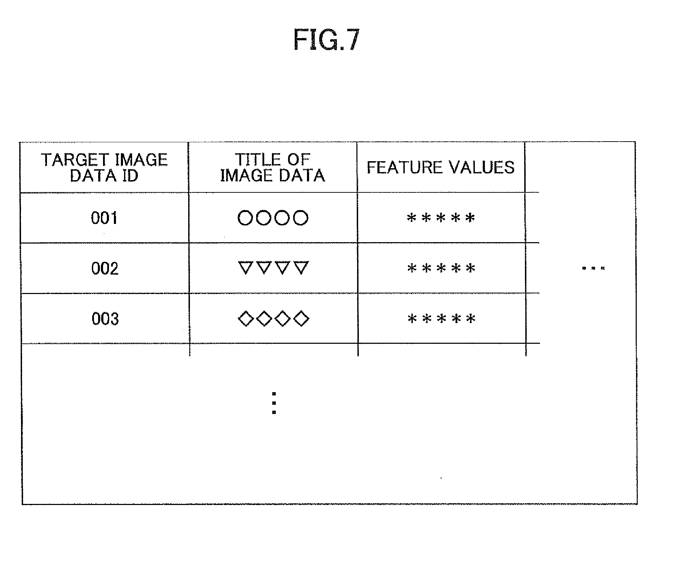

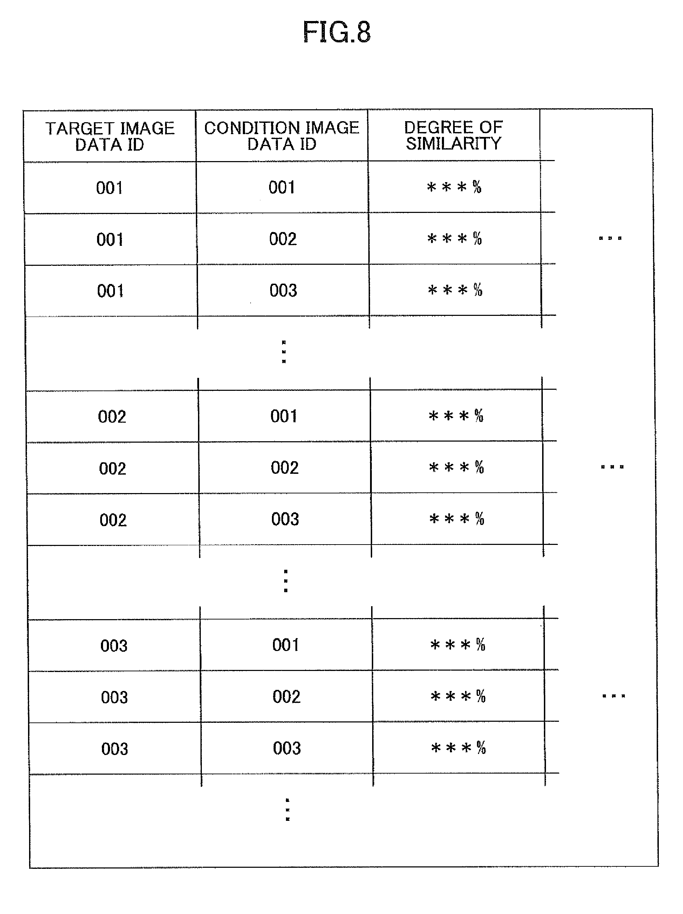

FIG. 7 shows an example of data stored in the image data DB 200. As shown in FIG. 7, the image data DB 200 stores not only each image data but also the title of the image data, the feature values of the image data, and the corresponding ID uniquely identifying the image data (hereinafter referred to as a "target image data ID") in a manner so that the title of the image data and the feature values of the image data are associated with the target image data ID. In step S408, the image data extraction section 103 compares the feature values input as the extraction condition data with the feature values of each image data stored in the image data DB 200 to calculate the degree of similarity between the input image data and the image data stored in the image data DB 200 and between the processed data and the image data stored in the image data DB 200. The data generated based on the calculation result are described with reference to FIG. 8.

FIG. 8 shows the data generated as a result of the process performed in step S408. As shown in FIG. 8, the data generated as the result of the process performed in step S408 include each target image data ID, the condition image data ID corresponding to the target image data ID, and the data of the degree of similarity corresponding to each of the target image data ID. As shown in FIG. 8, according to the embodiment of the present invention, all the degree of similarity between each condition image data and each image data stored in the image data DB 200 are calculated.

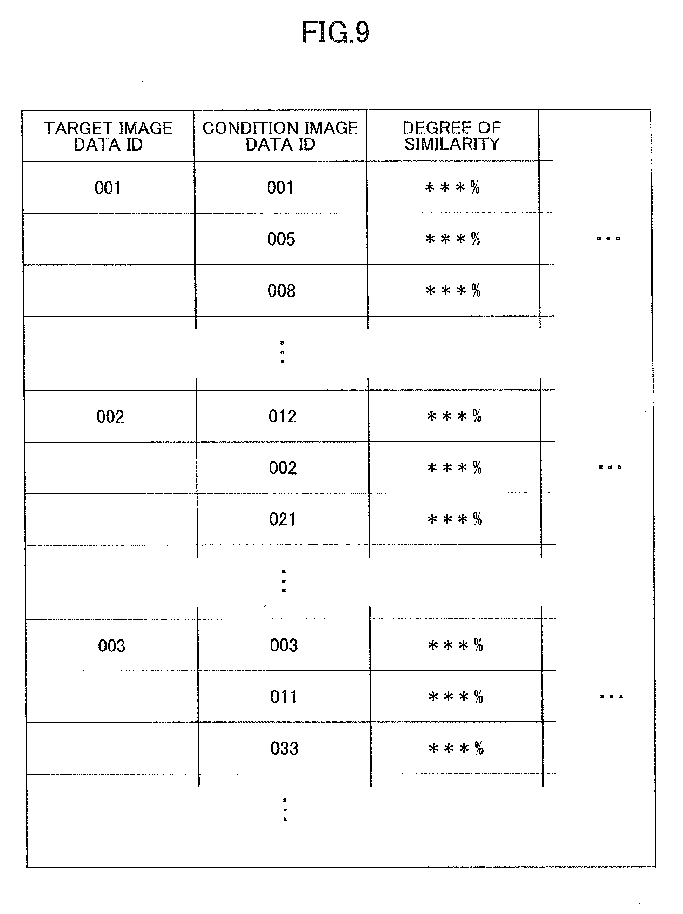

After generating the data shown in FIG. 8, the image data extraction section 103 extracts image data having the degree of similarity greater than a predetermined threshold value as the similar image data (in step S409) and generates extraction result data. Namely, the image data extraction section 103 serves as an image data extraction section. The image data extraction section is constituted by operating a program under the control of the CPU 10, the program having been loaded to the RAM 20 shown in FIG. 2. FIG. 9 shows an example of the data included in the extraction result data. As shown in FIG. 9, the extraction result data includes the data shown in FIG. 8 but excluding the data having lower degree of similarity (hereinafter referred to as "extraction result data")

The above threshold value refers to a value to be used to determine whether each image data to be retrieved is the similar image data based on the calculated degree of similarity. Namely, the threshold value is used to determine whether each image data stored in the image data DB 200 corresponds to the similar image data. In other words, the threshold value is set to exclude the image data not in conformity with the features of the condition image data from the extraction result. The threshold value may be set in accordance with the calculation mode of the degree of similarity in step S408. For example, in the process of comparing the feature values in step S408, when the calculation mode is such that the degree of similarity becomes "0%" when there is no similar features between the compared image data and the degree of similarity becomes other than "0%" when there are at least some similar features between the compared image data, the "0%" should be set as the threshold value.

In other cases, the threshold value may be set to a value other than "0%" depending on the calculation mode of the degree of similarity in step S408. Further, in addition to the case where the threshold value is used to exclude the image data not in conformity with the features of the condition image data from the extraction result, the threshold value may also be used to extract the image data having features having a relatively high degree of coincidence with those of the condition image data. In this case, a value greater than the above threshold value is set as the threshold value.

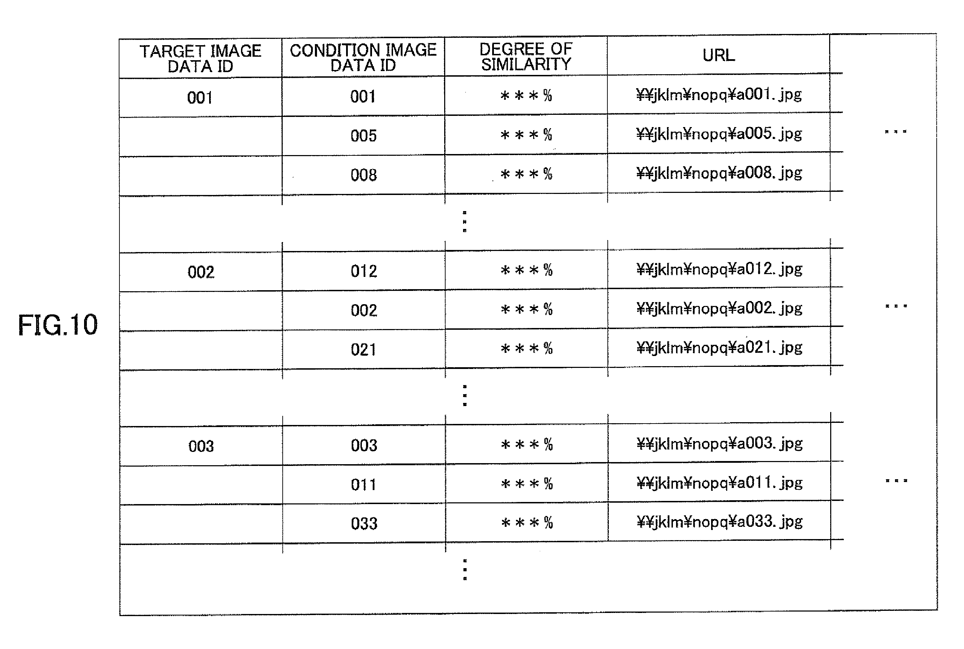

The image data extraction section 103 transmits the generated extraction result data to the extraction result processing section 104. Upon receiving the extraction result data, the extraction result processing section 104 determines a displaying order of the drawing data with respect to each condition image data. Further, the extraction result processing section 104 generates display data for displaying the extraction result and transmits the generated display data to the client apparatus 2 via the network I/F 120 (in step S410). The data included in the display data generated in step S410 is described with reference to FIG.10.

The display data generated in step S410 may include not only the data for constituting the GUI (Graphical User Interface) but also the data as shown in FIG. 10. Namely, the display data may include not only the extraction result data shown in FIG. 9 but also each URL (Uniform Resource Locator) data indicating the storage area where the corresponding target image data are stored. Further, the display data generated in step S410 may include the processed image data generated by the image processing section 102.

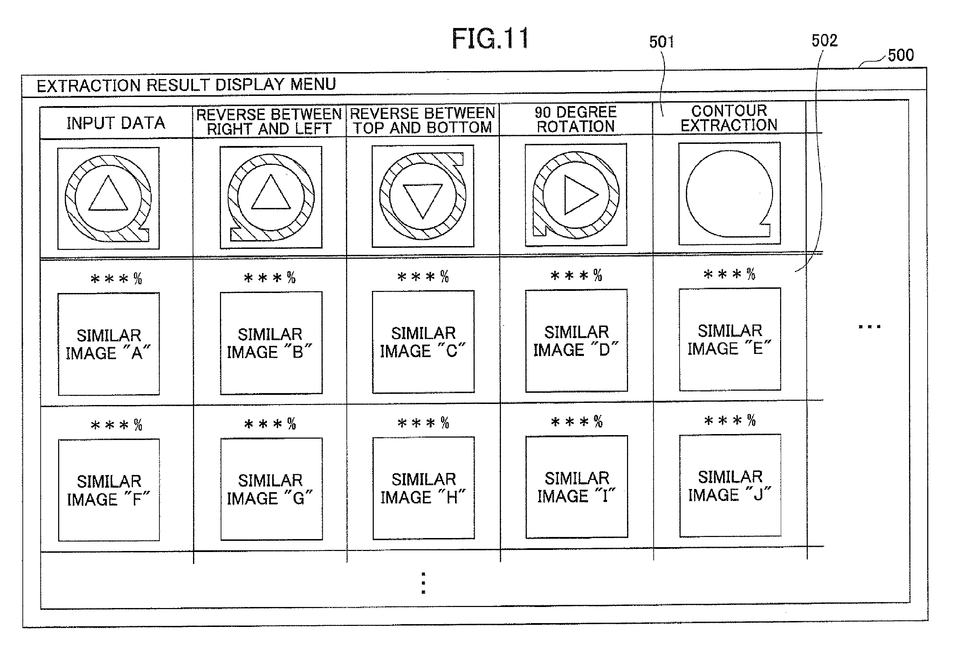

The client apparatus 2 displays the extraction result on its display section based on the display data received from the image retrieval apparatus 1 (in step S411), and the process ends. An exemplary menu displayed on the client apparatus 2 in step S411 is described with reference to FIG. 11. FIG. 11 shows an extraction result display menu 500 displayed based on the display data transmitted from the image retrieval apparatus 1 to the client apparatus 2. As shown in FIG. 11, according to the embodiment of the present invention, the extraction result display menu 500 includes a condition image data display section 501 and a similar image data display section 502.

The condition image data display section 501 is configured to display the input image data input by a user or the processed image data generated by the image processing section 102. As shown in FIG. 11, according to the embodiment of the present invention, each of the condition image data is aligned and displayed transversely in a row. Further, in the condition image data display section 501, along with the input image data or the processed data, the type of each condition image data such as "input image data", "reverse between right and left", and "reverse between top and bottom" is also displayed. The type of the each condition image data refers to a type of process preformed on the input image to generate the corresponding processed image data.

The similar image data display section 502 is configured to display each similar image data with respect to the condition image data displayed in the condition image data display section 501. As shown in FIG. 11, according to the embodiment of the present invention, the similar image data display section 502 is located under the condition image data display section 501. In the similar image data display section 502, a plurality of the similar image data are displayed in a matrix manner. Further, in the similar image data display section 502, the plurality of the image data extracted as the similar image data of the same condition image data are aligned and displayed in a column direction under the condition image data. For example, the case of FIG. 11 shows an example where the similar image data "A" and the similar image data "F" are extracted as the similar image data with respect to the input image data. Namely, according to the embodiment of the present invention, the extraction result processing section 104 generates the display data so that each input image data or each processed image data is associated and displayed with the corresponding similar image data extracted as the image data similar to the input image data or the processed image data, respectively.

Further, as shown in FIG. 11, in the similar image data display section 502, each degree of similarity value is displayed above the corresponding similar image data of the input image data or the processed image data. Namely, each degree of similarity value of the corresponding similar image data with respect to the corresponding input image data or processed imaged data is associated and displayed with the corresponding similar image data. According to the embodiment of the present invention, in the extraction result display menu 500, the displaying order of the plurality of the similar image data with respect to the same condition image data is determined so that the higher the degree of similarity value is, the greater the similar image data is located, i.e. the closer the similar image data is located to the position where the condition image data is displayed. To that end, the extraction result processing section 104 generates the display data in step S410 so that with respect to each condition image data, the plurality of the similar image data is aligned in a manner so that the greater the degree of the similarity value of the similar image data is, the higher the position where the similar image data is displayed.

In an image retrieval method according to the embodiment of the present invention, as described above with reference to FIGS. 5A and 5B, the feature values are extracted from not only the input image data but also each processed image data generated by performing the corresponding predetermined process on the input image data. In a case where the feature values are likely to be affected by the rotation, reverse and the like, if the similar image data is retrieved based on only the input image data, the rotated or the reversed image data and the like may not be appropriately retrieved as the similar image data. To resolve the problem, according to the embodiment of the present invention, the feature values may be extracted from the rotated and the reversed processed image data as well, thereby resolving the above problem. As a result, it becomes possible to use the feature values that may be affected by the rotation, the reversal and the like, thereby enabling improving the accuracy of the image data retrieval.

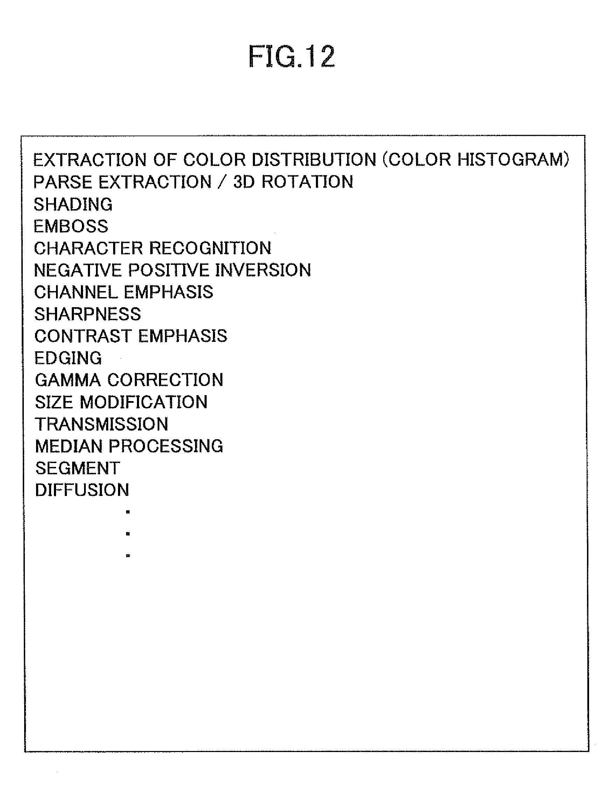

FIG. 12 shows exemplary processes that can be used as the image processing processes preformed by the image processing section 102. As shown in FIG. 12, according to the embodiment of the present invention, the image processing section 102 may perform various image processing on image data. Therefore, in step S406 of FIG. 4, by generating the extraction condition data after the various image processing as shown in FIG. 12 are performed, it may become possible to improve the accuracy of retrieving the similar image data.

The "parse extraction/3D rotation" in FIG. 12 refers to a process in which a parse is extracted from the input image data so that the displayed goods or the configuration of the figure is recognized as three-dimensional data and the three-dimensional data is rotated in a three-dimensional space. By doing such a process, it may become possible to display the same goods from different angles, which may make it possible to extract two or more different images as the similar image data even when the images are displayed in different modes (ways).

Further, there has been a problem that it is difficult to understand the reference on which the extracted similar image data is based. However, according to the embodiment of the present invention, as shown in FIG. 10, each condition image data is associated and displayed with the corresponding similar image data extracted as the image data similar to the condition image data. By displaying in this way, it may become easier to understand the condition image data on which the extracted similar image data is based. As a result, it may become easier to understand a cause of the extracted similar image data.

As described above, by using the image retrieval apparatus according to the embodiment of the present invention, it may become possible to overcome the limitation of feature values to be used for determining the similar image data and improve the accuracy of the retrieval. Further, it may become possible for a user to easily understand the retrieval result.

As described above, a case is described as an example where the image retrieval apparatus 1 retrieves the image data stored in the image data DB 200. In this case, the image data of designs, trademarks and the like may be thought to be the examples of the image data stored in the image data DB 200 as the retrieval target. Particularly, when the image data of design is retrieved, each design is generally equipped with the corresponding six drawings. Therefore, it may become easier to understand the three-dimensional shape of the goods to be retrieved. As a result, it may become easier to perform the "parse extraction/3D rotation process shown in FIG. 12.

Further, the drawing data included in the patent documents such as patent application publication gazette may be thought as an example of the image data stored in the image data DB 200 to be retrieved. The drawings included in patent documents are displayed in black and white. Therefore, after the "binarization" process of the image processing is performed, by retrieving the similar image data, it may become possible to improve the accuracy of retrieving the drawing included in patent documents. Further, there may be some documents in patent documents that are rotated by 90 degrees. In such a case, after the "90 degree rotation" process of the image processing is performed, by retrieving the similar image data, it may become possible to improve the accuracy of retrieving the drawing.

In the above description, a case of "90 degree rotation" is described as the process of rotating the image data. However, the rotation angle is not necessarily limited to 90 degrees, and any degree may be set. Further, in order to make it possible to retrieve the similar image data from wider range, the input image data may be rotated by a plurality of any angles. In this case, for example, the input image data may be rotated by every 15 degrees such as 15 degrees, 30 degrees, 45 degrees, 60 degrees,..., 345 degrees to generate the corresponding output image data. If an angle less than 15 degrees is set in the above case, it may become possible to generate more output image data and thereby enabling extracting the similar image data from wider range of the image data. On the other hand, if an angle greater than 15 degrees is set in the above case, less image data may be generated thereby enabling reducing the load required to perform the retrieval process.

Further, as shown in FIG. 5, according to an embodiment of the present invention, as the types of image processing that can be performed by the image processing section 102, the "reverse between right and left" and the "reverse between top and bottom" processes are provided. These processes may be classified as a "reverse" process. However, those processes may be also classified as a "rotation" process. This is because the "reverse between right and left" process may be performed by rotating the image data by 180 degrees around an axis extending in the direction parallel to the surface of the image data and parallel to the height direction of the image data, and the "reverse between top and bottom" process may be performed by rotating the image data by 180 degrees around an axis extending in the direction parallel to the surface of the image data and parallel to the width direction of the image data.

An object of the image retrieval is to extract image data of goods and figures similar to the goods and figures displayed as the image data. However, in a case where the image data of the goods or figures are displayed from different angles, one image data may not be recognized as the similar image data of the other image data due to the different shapes caused by the different angles even when those goods or figures are the same with each other. However, by performing (adding) such a rotation process, the above problem may be resolved.

Further, as described with reference to FIG. 12, according to the embodiment of the present invention, the image processing section 102 may perform the "parse extraction/3D rotation" process. On the other hand, as described above, there may be a case where it is difficult to extract the similar data due to the different angles. The problem may become more remarkable if the goods or the like to be displayed as the image data has a cubic (three-dimensional) structure. This is because if the goods or the figure has a cubic structure, the shape of the goods or the figure displayed as the image data may largely differ when the goods or the figure is displayed from different angles. However, such problem may be resolved by performing the above "parse extraction/3D rotation" process.

When the above "parse extraction/3D rotation" process is preformed, the image data itself is not rotated but the shape of the goods or the figure displayed as the input image data is rotated. On the other hand, when any of the "90 degree rotation", the "reverse between right and left", and the "reverse between top and bottom" processes is performed, the image data itself is rotated. From this point of view, the meaning of the rotation may be different between the process of the "parse extraction/3D rotation" and the processes of "90 degree rotation", the "reverse between right and left", and the "reverse between top and bottom". However, those processes have the common feature of rotating the shapes displayed as the image data. As described above, in image retrieval, there has been one of the major problems that the image data of the goods or figures displayed from different angles may not be retrieved as the similar image data. However, as described above, by performing the rotation process, it may become possible to improve the accuracy of retrieval in the image retrieval process.

According to an embodiment of the present invention, there is provided an image retrieval apparatus capable of extracting a similar image from a plurality of retrieval target image data stored in advance, the similar image being similar to an input image. The image retrieval apparatus includes an input image data acquisition unit acquiring data of the input image as input image data, an image processing unit generating a plurality of processed image data by performing a process on the acquired input image data, an extraction condition data generation unit which, based on the generated plurality of processed image data, generates a plurality of extraction condition data that become conditions for extracting the similar image from the retrieval target image data, an image data extraction unit extracting the similar image from the retrieval target image data based on each of the generated plurality of extraction condition data, and an extraction result display data generation unit configured to generate extraction result display data to display the extracted similar image. In the image retrieval apparatus, the extraction result display data generation unit generates the extraction result display data so that the extracted similar image is associated and displayed with the extraction condition data used as the conditions to extract the similar image.

According to an embodiment of the present invention, the image processing unit may generate the processed image data by rotating and displaying a shape displayed by the acquired input image data.

According to an embodiment of the present invention, the extraction result display data generation unit may generate the extraction result display data so that an input image displayed by the input image data is associated and displayed with a similar image extracted as an image similar to the input image and generates the extraction result display data so that a processed image displayed by the processed image data is associated and displayed with a similar image extracted as an image similar to the processed image.

According to an embodiment of the present invention, the extraction result display data generation unit may generate the extraction result display data so that a data indicating a process performed on the input image data upon generating the processed image data is associated and displayed with a similar image extracted as an image similar to the processed image.

According to an embodiment of the present invention, the extraction result display data generation unit may generate the extraction result display data so that a data of degree of similarity between an input image or a processed image displayed by the input image data or the processed image data and a similar image extracted as an image similar to the input image or the processed image, respectively, is associated and displayed with the similar image.

According to an embodiment of the present invention, the extraction condition data generation unit may generate the extraction condition data by calculating feature values of the input image data and the processed image data, and the image data extraction unit may calculate a degree of similarity between the input image data and the retrieval target image data and a degree of similarity between the processed image data and the retrieval target image data based on the calculated feature values and feature values of the retrieval target image data and extracts the similar image based on the calculated degree of similarity.

According to an aspect of the present invention, the image data extraction unit may extract an image as the similar image, the calculated degree of similarity of the image being greater than a predetermined threshold value.

According to an aspect of the present invention, the extraction result display data generation unit may determine a displaying order of the similar images based on the calculated degree of similarity.

According to an embodiment of the present invention, there is provided an image retrieval apparatus capable of extracting a similar image from a plurality of retrieval target image data stored in advance, the similar image being similar to an input image, the image retrieval apparatus including an input image data acquisition unit configured to acquire data of the input image as input image data, a rotation image data generation unit configured to, based on the input image data, generate rotation image data by rotating and displaying a shape displayed by the acquired input image data, an extraction condition data generation unit configured to, based on the acquired input image data and the generated rotation image data, generate an extraction condition data that become conditions for extracting the similar image from the retrieval target image data, an image data extraction unit configured to extract the similar image from the retrieval target image data based on the generated extraction condition data, and an extraction result display data generation unit configured to generate extraction result display data to display the extracted similar image.

According to an embodiment of the present invention, there is provided an image retrieval method that is used in an image retrieval apparatus including an input image data acquisition unit, an image processing unit, an extraction condition data generation unit, an image data extraction unit, and an extraction result display data generation unit and that is capable of extracting a similar image from a plurality of retrieval target image data stored in advance, the similar image being similar to an input image. The image retrieval method includes an input image data acquisition step of acquiring data of the input image as input image data by the input image data acquisition unit, a processed image data generation step of generating a plurality of processed image data by the image processing unit by performing a process on the acquired input image data, an extraction condition data generation step of, based on the generated plurality of processed image data, generating a plurality of extraction condition data that become conditions for extracting the similar image from the retrieval target image data by the an extraction condition data generation unit, a similar image extraction step of extracting the similar image from the retrieval target image data by the an image data extraction unit based on each of the generated plurality of extraction condition data; and an extraction result display data generation step of generating extraction result display data by an extraction result display data generation unit so that the extracted similar image is associated and displayed with the extraction condition data which become the conditions to extract the similar image.

According to an embodiment of the present invention, in the processed image data generation step, the image processing unit may generate, based on the input image data, a rotation image data by rotating and displaying a shape displayed by the acquired input image data; in the extraction condition data generation step, based on the acquired input image data and the generated rotation image data, the extraction condition data generation unit may generate an extraction condition data that become conditions for extracting the similar image from the retrieval target image data; in the similar image extraction step, the image data extraction unit may extract the similar image from the retrieval target image data based on each of the generated plurality of extraction condition data; and in the extraction result display data generation step, the extraction result display data generation unit may generate extraction result display data to display the extracted similar image.

According to an embodiment of the present invention, there is provided a data processing program capable of causing an information processing apparatus to execute the image retrieval method described above.

According to an embodiment of the present invention, there is provided a recording medium recording the data processing program so that the data processing program can be read by an image processing apparatus.

## Claims

1. An image retrieval apparatus (1) capable of extracting a similar image from a plurality of retrieval target image data stored in advance, the similar image being similar to an input image, the image retrieval apparatus (1) **characterized by**:
an input image data acquisition unit (101) configured to acquire data of the input image as input image data;
an image processing unit (102) configured to generate a plurality of processed image data by performing a process on the acquired input image data;
an extraction condition data generation unit (102) configured to, based on the generated plurality of processed image data, generate a plurality of extraction condition data that become conditions for extracting the similar image from the retrieval target image data;
an image data extraction unit (103) configured to extract the similar image from the retrieval target image data based on each of the generated plurality of extraction condition data; and
an extraction result display data generation unit (104) configured to generate extraction result display data to display the extracted similar image,
**characterized in that**
the extraction result display data generation unit (104) generates the extraction result display data so that the extracted similar image is associated and displayed with the extraction condition data used as the conditions to extract the similar image.

2. The image retrieval apparatus (1) according to claim 1, **characterized in that**
the image processing unit (102) generates the processed image data by rotating and displaying a shape displayed by the acquired input image data.

3. The image retrieval apparatus (1) according to claim 1, **characterized in that**
the extraction result display data generation unit (104) generates the extraction result display data so that an input image displayed by the input image data is associated and displayed with a similar image extracted as an image similar to the input image and generates the extraction result display data so that a processed image displayed by the processed image data is associated and displayed with a similar image extracted as an image similar to the processed image.

4. The image retrieval apparatus (1) according to claim 1, **characterized in that**
the extraction result display data generation unit (104) generates the extraction result display data so that a data indicating a process performed on the input image data upon generating the processed image data is associated and displayed with a similar image extracted as an image similar to the processed image.

5. The image retrieval apparatus (1) according to claim 1, **characterized in that**
the extraction result display data generation unit (104) generates the extraction result display data so that a data of degree of similarity between an input image or a processed image displayed by the input image data or the processed image data and a similar image extracted as an image similar to the input image or the processed image, respectively, is associated and displayed with the similar image.

6. The image retrieval apparatus (1) according to claim 1, **characterized in that**
the extraction condition data generation unit (102) generates the extraction condition data by calculating feature values of the input image data and the processed image data, and
the image data extraction unit (103) calculates a degree of similarity between the input image data and the retrieval target image data and a degree of similarity between the processed image data and the retrieval target image data based on the calculated feature values and feature values of the retrieval target image data and extracts the similar image based on the calculated degree of similarity.

7. The image retrieval apparatus (1) according to claim 6, **characterized in that**
the image data extraction unit (103) extracts an image as the similar image, the calculated degree of similarity of the image being greater than a predetermined threshold value.

8. The image retrieval apparatus (1) according to claim 6, **characterized in that**
the extraction result display data generation unit (104) determines a displaying order of the similar images based on the calculated degree of similarity.

9. The image retrieval apparatus (1) according to claim 1, **characterized in that**
the image processing unit (102), based on the input image data, generates rotation image data by rotating and displaying a shape displayed by the acquired input image data;
the extraction condition data generation unit (102), based on the acquired input image data and the generated the rotation image data, generates an extraction condition data that become conditions for extracting the similar image from the retrieval target image data;
the image data extraction unit (103) extracts the similar image from the retrieval target image data based on the generated extraction condition data;
the extraction result display data generation unit (104) generates extraction result display data to display the extracted similar image; and
the extraction result display data generation unit (104) generates extraction result display data to display the extracted similar image.

10. An image retrieval method that is used in an image retrieval apparatus (1) including an input image data acquisition unit (101), an image processing unit (102), an extraction condition data generation unit (102), an image data extraction unit (103), and an extraction result display data generation unit (104) and that is capable of extracting an similar image from a plurality of retrieval target image data stored in advance, the similar image being similar to an input image, the image retrieval method **characterized by**:
an input image data acquisition step of acquiring data of the input image as input image data by the input image data acquisition unit;
a processed image data generation step of generating a plurality of processed image data by the image processing unit by performing a process on the acquired input image data;
an extraction condition data generation step of, based on the generated plurality of processed image data, generating a plurality of extraction condition data that become conditions for extracting the similar image from the retrieval target image data by the an extraction condition data generation unit;
a similar image extraction step of extracting the similar image from the retrieval target image data by the an image data extraction unit based on each of the generated plurality of extraction condition data; and
an extraction result display data generation step of generating extraction result display data by the an extraction result display data generation unit so that the extracted similar image is associated and displayed with the extraction condition data which become the conditions to extract the similar image.

11. The image retrieval method according to claim 10, **characterized in that**
in the processed image data generation step, the image processing unit generates, based on the input image data, a rotation image data by rotating and displaying a shape displayed by the acquired input image data;
in the extraction condition data generation step, based on the acquired input image data and the generated the rotation image data, the extraction condition data generation unit generates an extraction condition data that become conditions for extracting the similar image from the retrieval target image data;
in the similar image extraction step, the image data extraction unit extracts the similar image from the retrieval target image data based on each of the generated plurality of extraction condition data; and
in the extraction result display data generation step, an extraction result display data generation unit generates extraction result display data to display the extracted similar image.

12. A data processing program capable of causing an information processing apparatus to execute the image retrieval method according to claim 10.

13. A recording medium recording the data processing program according to claim 12 so that the data processing program can be read by an image processing apparatus.
